# EUROPEAN PATENT APPLICATION

(11) **EP 1 914 976 A1**
(43) Date of publication of application: **23.04.2008**
(21) Application number: 07018918.8
(22) Date of filing: 26.09.2007
(51) Int. Cl.: H04N 1/32, H04N 1/00

(54) **Image forming apparatus, image processing method and image processing program**

(30) Priority: 16.10.2006 JP 2006281828
(71) Applicant: KONICA MINOLTA BUSINESS TECHNOLOGIES, INC., Chiyoda-ku Tokyo 100-0005 (JP)
(72) Inventor: Harashima, Takashi, Tokyo 100-0005 (JP); Sakatani, Kazuomi, Tokyo 100-0005 (JP); Sakai, Tetsuya, Tokyo 100-0005 (JP); Hirota, Soh, Tokyo 100-0005 (JP); Kouzaki, Masahiro, Tokyo 100-0005 (JP)
(74) Representative: HOFFMANN EITLE

(57) **Abstract**

An image forming apparatus comprises: a reader to read image; an output part to output the image; an information giving part to give additional information to the image before the image is outputted by said output part; an output controller to make said output part output a plurality of test patterns for output level correction of additional information in different output levels; a data calculator for output level correction, to calculate data for output level correction of said additional information based on reading results drew by said reader from said outputted test patterns for output level correction of additional information; and an output level corrector to correct an output level of said additional information based on said calculated data for correction.

## Description

This application is based on Japanese Patent Application No. 2006-281828 filed on October 16, 2006, the entire disclosure of which is incorporated herein by reference in its entirety.

### BACKGROUND OF THE INVENTION

### Field of the Invention

The present invention relates to an image forming apparatus such as a copy machine that ensures higher security, for example, by giving additional information such as a ground pattern on a paper document, an image processing method, and an image processing program recorded in a computer readable recording medium to make a computer of the image forming apparatus execute image processing.

### Description of the Related Art

The following description sets forth the inventor's knowledge of related art and problems therein and should not be construed as an admission of knowledge in the

### prior art.

In recent years, there have been more cases of leakage of personal and confidential information, and the overall society now demands higher security. One of the promotions ongoing in the society is security enhancement for paper documents to prevent leakages, for example that a confidential document copied by a copy machine is leaked to outsiders, and printed paper (outputted paper) copied from an original document is used wrongly as if it were the original document itself.

Consequently, a copy machine manufacturer has developed an art that enables a copy machine to give a ground pattern as additional information on paper printed by a copy machine (an original document), in order to make paper copied from the printed paper easily differentiated from the original document itself.

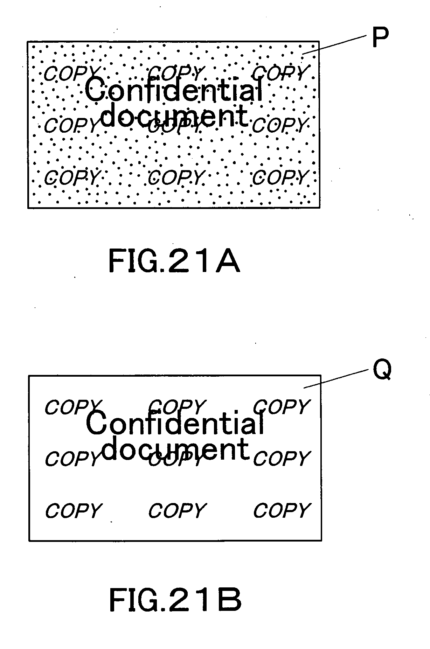

A ground pattern is, for example, hidden characters or marks (for example, characters "COPY") to caution that copy is prohibited, which is given on printed paper P as shown in Fig. 21 (A), and if the paper P is read by an image scanner that is an image reader of a copy machine, the characters or marks ("COPY'') become visible on printed (copied) paper Q as shown in Fig. 21 (B).

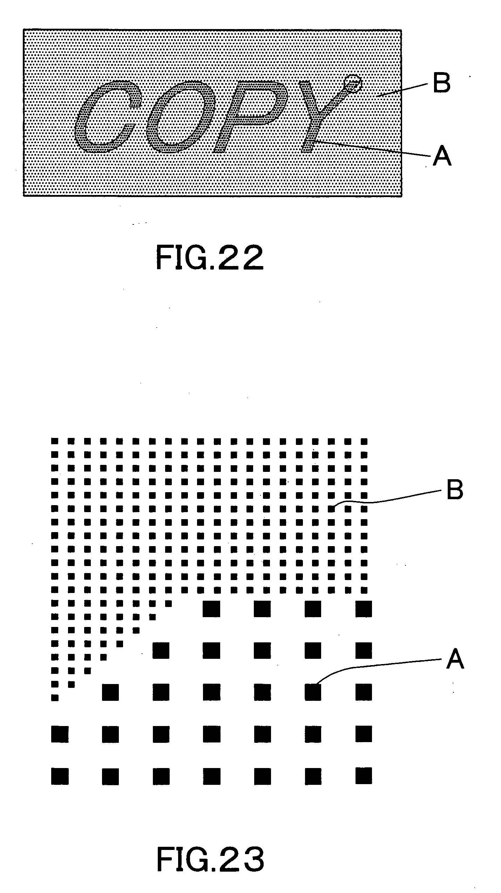

Fig. 22 shows an example of the ground pattern.

As shown in Fig. 22, lines of the characters "COPY" correspond to a latent image part A that becomes visible on paper copied by a copy machine, and the area other than the lines of the characters "COPY" corresponds to a background part B that stays invisible on paper copied by a copy machine.

Fig. 23 shows the boundary area between the latent image part A and the background part B, which is magnified for a detailed view of a dotted pattern with a small number of large dots in the latent image part A and another dotted pattern with a large number of small dots in the background part B. It is possible to enable the image scanner to detect the dots by enlarging the size of the dots that forms the latent image part A, on the other hand, it is possible to disable the image scanner to detect the dots by reducing the size of the dots that forms the background part B. It is preferable that the latent image part A and the background part B look in the same density, since in this way the characters or marks that are the latent image part A can be faded into the background.

In sum, it is an advantage of using a ground pattern that only the latent image part A becomes visible on copied paper, by giving dots in the latent image part A, which size is different from that in the background part B, and utilizing the limitation of resolution of the image scanner. As described above, a ground pattern is one of the arts having been developed to ensure higher security of a paper document (for example, refer to the Japanese Unexamined Laid-open Patent Publication 2001-197297).

Meanwhile, if the apparatus is configured with a fixed image development condition or a fixed image creation method, an output level of a ground pattern, i.e. output levels of the background part B and the latent image part A may happen to be changed by a disturbance such as an environmental factor or aging.

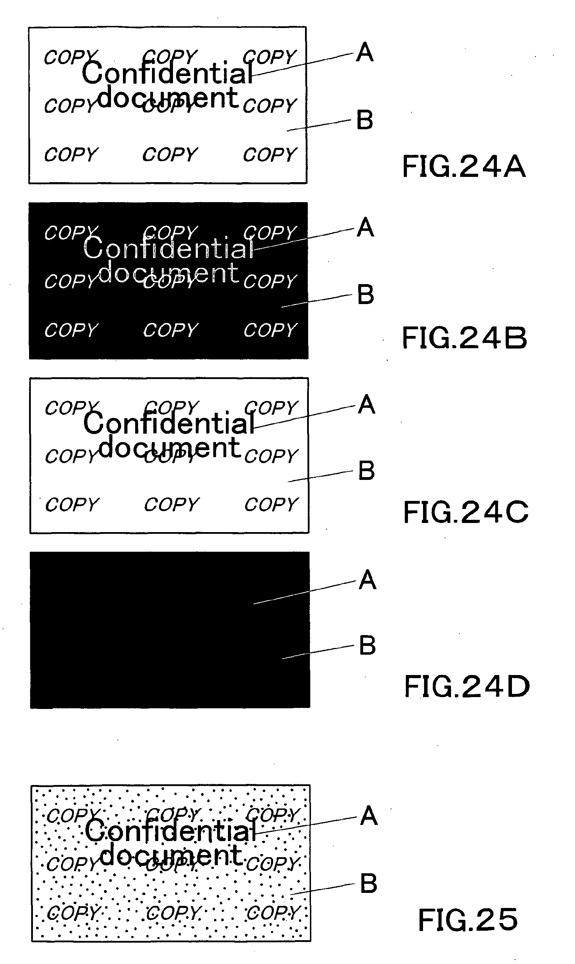

Different output levels between the latent image part A and the background part B may cause following inconveniences: if an output level of the background part B is low and that of the latent image part A is high, hidden characters, i.e. a ground pattern, potentially become visible on paper printed by a ground pattern print mode, as shown in Fig. 24 (A).

On the other hand, if an output level of the background part B is high and that of the latent image part A is low, not only the hidden characters potentially become visible but also original texts potentially become poorly visible on paper printed by a ground pattern print mode, due to the relatively high output level of the background part B, as shown in Fig. 24 (B)

Thus, in order to print paper with a ground pattern in the best condition, wherein the latent image part is faded into the background part, it is necessary to adjust output levels of the background part B and the latent image part A to the same level.

In this regard, however, if output levels of the background part B and the latent image part A are both too low, the characters that is the latent image part A stays invisible on paper that is copied after printed by a ground pattern print mode, as shown in Fig. 24 (C), and this is no use.

On the other hand, if output levels of the background part B and the latent image part A are both too high, although the hidden characters stays invisible, the original texts become poorly visible, on paper printed by a ground pattern print mode, as shown in Fig. 24 (D).

As described above, in order to print on paper a ground pattern in the best condition, it is necessary not only to adjust output levels of the background part B and the latent image part A to the same level, but also to correct the output levels, i.e. set them to an optimal level, not too low neither too high, as shown in Fig. 25. And people eagerly wait for an image forming apparatus having such a correction function that fulfills the requirements above.

According an art disclosed in United States Patent Application Publication No. 2005/0058476, a user selects the best image (ground pattern image) among a series of test patterns (of the background part B and the latent image part A) printed in different densities, in order to obtain printed paper with a ground pattern in the best condition.

However, it is still inconvenient in the art disclosed in the United States Patent Application Publication above that a user is required to select the best ground pattern image manually, and this is troublesome and takes time.

There is another idea where an output level of a ground pattern is corrected based on data acquired by a sensor that senses the amount of used toner when image stabilization control is performed. However, it is still inconvenient with this idea that small differences among extremely small sizes of dots that form a ground pattern cannot be detected with a high degree of accuracy.

The description herein of advantages and disadvantages of various features, embodiments, methods, and apparatus disclosed in other publications is in no way intended to limit the present invention. Indeed, certain features of the invention may be capable of overcoming certain disadvantages, while still retaining some or all of the features, embodiments, methods, and apparatus disclosed therein.

### SUMMARY OF THE INVENTION

The preferred embodiments of the present invention have been developed in view of the above-mentioned and/or other problems in the related art. The Preferred embodiments of the present invention can significantly improve upon existing methods and/or apparatuses.

It is an object of the present invention to provide an image forming apparatus that is able to correct an output level of additional information such as a ground pattern without user operation to select the best image of the additional information, if the output level of the additional information happens to be changed by a disturbance.

It is another object of the present invention to provide an image processing method that is able to correct an output level of additional information such as a ground pattern, without user operation to select the best image of the additional information, if the output level of the additional information happens to be changed by a disturbance.

It is yet another object of the present invention to provide an image processing program recorded in a computer readable recording medium to make a computer of the image forming apparatus execute image processing.

According to a first aspect of the present invention is an image forming apparatus, comprising:
a reader to read image;
an output part to output the image;
an information giving part to give additional information to the image before the image is outputted by said output part;
an output controller to make said output part output a plurality of test patterns for output level correction of additional information in different output levels;
a data calculator for output level correction, to calculate data for output level correction of said additional information based on reading results drew by said reader from said outputted test patterns for output level correction of additional information; and
an output level corrector to correct an output level of said additional information
based on said calculated data for correction.

According to a second aspect of the present invention is an image processing method, comprising:
reading image by a reader;
outputting the image by an output part;
giving additional information to the image before outputting the image by said output part;
making said output part output a plurality of test patterns for output level correction of additional information in different output levels;
calculating data for output level correction of said additional information based on reading results drew by said reader from said outputted test patterns for output level correction of additional information; and
correcting an output level of said additional information based on said calculated
data for correction.

According to a third aspect of the present invention is an image processing program recorded in a computer readable recording medium to make a computer execute:
reading image by a reader;
outputting the image by an output part;
giving additional information to the image before outputting the image by said output part;
making said output part output a plurality of test patterns for output level of additional information in different output levels;
calculating data for output level correction of said additional information based on reading results drew by said reader from said outputted test patterns for output level correction of additional information; and
correcting an output level of said additional information based on said calculated
data for correction.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### BRIEF DESCRIPTION OF THE DRAWINGS

The preferred embodiments of the present invention are shown by way of example, and not limitation, in the accompanying figures, in which:

Fig. 1 is a block diagram showing an electrical configuration of an image forming apparatus according to one embodiment of the present invention;

Fig. 2 is a schematic diagram showing a configuration of a scanner;

Fig. 3 is a block diagram showing a functional configuration of an image signal processor;

Fig. 4 is a flowchart showing processes to create a ground pattern;

Fig. 5 is a diagram showing latent image part definition image data to merge a background part and a latent image part to form a ground pattern;

Fig. 6 is a flowchart showing processes to acquire data for output level correction of ground pattern;

Fig. 7 is a diagram showing test patterns for output level correction of ground pattern;

Fig. 8 is a diagram showing outputted paper carrying the test patterns for correction in Fig. 7;

Fig. 9 is a diagram to explain how to change the size of pixels by changing laser light volume in order to change the output level of the ground pattern;

Fig. 10 is a diagram to explain how to change the layout of pixels in order to change the output level of the ground pattern;

Fig. 11 is a table showing detecting results from test patterns for output level correction of the background part of the ground pattern;

Fig. 12 is a table showing detecting results from test patterns for output level correction of the latent image part of the ground pattern;

Fig. 13 is a chart of output characteristic to explain how to calculate laser light volume for the background part;

Fig. 14 is a flowchart showing processes to calculate laser light volume for the background part;

Fig. 15 is a diagram showing outputted paper carrying a plurality of sets of the test patterns for output level correction of the latent image part and the background part, which are repeatedly aligned in the longitudinal direction (in the main-scanning direction) of the developing sleeve;

Fig. 16 is a diagram showing a test pattern for tone correction;

Fig. 17 is a diagram showing outputted paper carrying test patterns for tone correction;

Fig. 18 is a chart of tone characteristic of a test pattern on the outputted paper in Fig. 17, which is read by the scanner;

Fig. 19 is a chart of tone characteristic of original image data whose tones are to be corrected;

Fig. 20 is a chart of tone characteristic of image data whose tones are corrected;

Fig. 21 is a diagram to explain the ground pattern;

Fig. 22 is a diagram showing an example of the ground pattern;

Fig. 23 is a magnified view of boundary area between the background part and the latent image part of the ground pattern;

Fig. 24 shows diagrams to explain the ground pattern, if output levels of the background part and the latent image part are different; and

Fig. 25 is a diagram showing an example of the ground pattern, if output levels of the background part and the latent image part are optimal.

### DETAILED DESCRIPTION OF THE PREFERRED EMBODIMENTS

In the following paragraphs, some preferred embodiments of the invention will be described by way of example and not limitation. It should be understood based on this disclosure that various other modifications can be made by those in the art based on these illustrated embodiments.

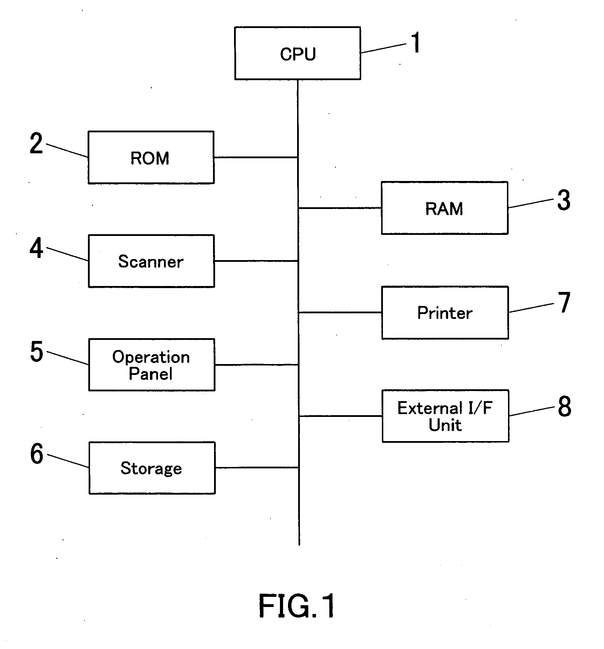

Fig. 1 is a block diagram showing an electrical configuration of a copy machine that is an image forming apparatus according to one embodiment of the present invention. As shown in this embodiment, examples of additional information to be given to image include, but are not limited to a ground pattern.

As shown in Fig. 1, the copy machine comprises, for example, a CPU 1, a ROM 2, a RAM 3, a scanner 4, an operation panel 5, a storage 6, a printer 7 and an external interface (I/F) 8.

The CPU 1 serves to control the overall copy machine, but specifically in this embodiment, it further serves to control giving to image a ground pattern that is additional information, performing a tone correction of the image and an output level correction of the ground pattern, and calculating data for these corrections, and etc.

The ROM 2 is a memory that stores a program to make the CPU 1 work, and the CPU 1 executes and controls various processes according to the program stored on the ROM 2.

The RAM 3 is a memory that provides working area for the CPU 1 to work according to the program.

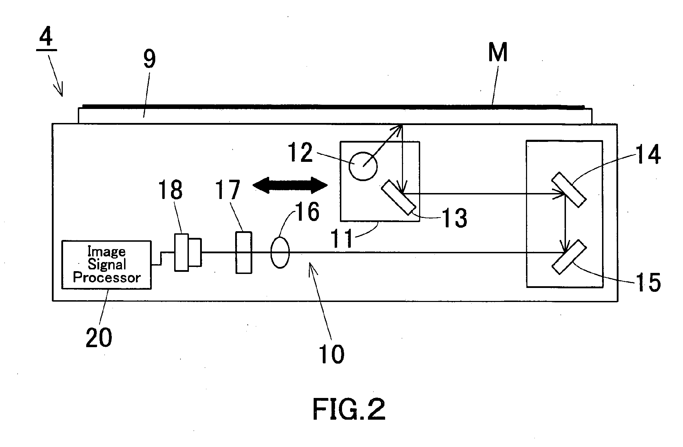

The scanner 4 comprises for example an image scanner, and serves to read image on a document M placed on a document table 9 (shown in Fig. 2) for outputting the image. In this embodiment, the scanner 4 further serves to read not only test patterns for output level correction of ground pattern, which are used to correct an output level of a ground pattern, but also test patterns for tone correction, which are used to correct a tone of image to be given the ground pattern, as described below.

The operation panel 5 comprises a numeric keypad and a touch panel display not shown in Figure, for various user input operations. And it also serves to display messages, works in process and processing results, on the display for users.

The storage 6 serves to store an application program, data of a ground pattern to be given to image, data of test patterns for output level correction of ground pattern and tone correction, and other various data.

The printer 7 comprises a photoreceptor, a development part, a fixing part, a sheet feeder, a transfer belt and etc. not shown in Figure, and serves to form image based on image data from the scanner part 4 and print the image on paper. In this embodiment, the printer 7 prints on paper a plurality of test patterns for output level correction of ground pattern in different output levels, and a plurality of test patterns for tone correction in different tones. Further explanation about the printer 7 is omitted because its configuration is already heretofore known.

The external interface 8 serves as a communication part to exchange data with an external device that works on a network, for example, a user terminal.

Fig. 2 is a schematic diagram showing a configuration of the scanner 4.

As shown in Fig. 2, the scanner 4 comprises the document table 9, an image reader 10 and an image signal processor 20.

The document table 9 comprises a transparent board like a glass board on which the document M is placed.

The image reader 10 is located just under the document table 9, and comprises a slider 11 capable of moving back and forth in the sub-scanning direction (the horizontal direction) as indicated by an arrow, mirrors 14 and 15, a lens 16, a prism 17, a CCD 18 as an image sensor, and etc.

The slider 11 comprises an irradiation lamp 12 to irradiate image of the document M with light, and a mirror 13 to direct the light reflected from the image of the document to a predetermined direction, and it serves to read the image of the document by moving back and forth automatically at a constant speed in the sub-scanning direction.
The light originating from the irradiation lamp 12 is reflected depending on the tone of the image of the document M placed on the document table 9.

The light directed by the mirror 13 is redirected by the mirrors 14 and 15, and routed through the lens 16 into the prism 17. The prism 17 serves to split the incoming light into the three colors of R (red), G (green) and B (blue), depending on its wavelength.

The three colors of light split by the prism 17 enter the three CCDs 18 exclusively allocated for the respective colors. Elements of the colors R, G and B in one line in the main-scanning direction are picked up by the three CCDs 18 at one time from the image of the document. In this way, the two-dimensional image of the document M is steadily read at several times by the slider 11 that moves back and forth in the sub-scanning direction.

The image signal processor 20 serves to receive analog signals outputted from the CCDs 18, and convert them to a predetermined format of image data in cooperation with the CPU 1.

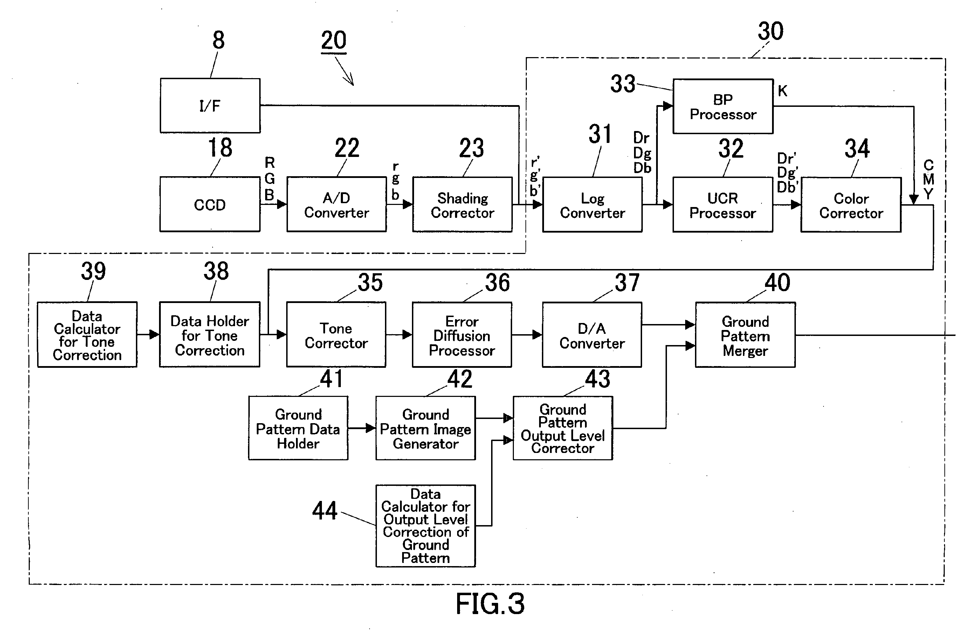

Fig. 3 is a block diagram showing a functional configuration of the image signal processor 20.

As shown in Fig. 3, the image signal processor 20 serves to perform various digital signal processes including error diffusion on the image data read out from the document or image data inputted from an external device via the external interface 8, and output print data for pseudo halftone image expression. In addition, it also serves to add ground pattern data to the print data if needed.

The image signal processor 20 comprises, for example, an A/D converter 22, a shading corrector 23 and an image corrector 30.

The A/D converter 22 performs offset and gain corrections on the analog signals inputted from the CCDs 18, and converts the corrected signals of the respective colors R, G and B to eight-bit image data (r, g and b) (256 tones).

The shading corrector 23 performs corrections of spotty data caused by the irradiation lamp 12 to distribute light and the CCDs 18 to detect pixels, on the image data of the respective colors.

In this way, image data S1 (r', g' and b) of the respective colors, which indicate brightness, are outputted from the shading corrector 23 or the external interface 8.

The image corrector 30 comprises a log converter 31, a UCR processor 32, a BP processor 33, a color corrector 34, a tone corrector 35, an error diffusion processor 36, a D/A converter 37, a data holder 38 for tone correction, a data calculator 39 for tone correction, a ground pattern merger 40, a ground pattern data holder 41, a ground pattern image generator 42, a ground pattern output level corrector 43, a data calculator 44 for output level correction of ground pattern, and others.

The log converter 31 converts the image data to image data (Dr, Dg and Db) indicating the optimal tones to meet the human relative visibility.

The UCR processor 32 serves to pick up dark color elements to be reproduced in Black toner, from the image data (Dr, Dg and Db), and correct data values of R, G and B depending on a value of the picked up elements.

The BP processor 33 serves to generate Black data (K data) based on the data from the UCR processor 32 and the log converter 31.

After the UCR processing, the color corrector 34 serves to perform a mask calculation for color correction, and the color correction is that the image data (Dr', Dg' and Db') indicating the optimal tones for the respective colors R, G and B, is converted to toner image data of three colors, C (cyan), M (magenta) and Y (yellow) to adjust to the toner characteristic.

The image data of the four colors C, M, Y and K consists of pixels, each having eight bits, to reproduce image in 256 tones.

The tone corrector 35 corrects a tone caused by a back ground color and a density slope of the image on the document M, according to data such as a γ correction table that is recorded in the data holder 38 for tone correction.

The data calculator 39 for tone correction, calculates data (such as data in the γ correction table) to be used by the tone corrector 35 for tone correction. In this embodiment, there are two methods to calculate data for tone correction: it is calculated based on reading results drew by the scanner 4 from test patterns for tone correction, which are outputted on paper or others, and it is calculated based on detecting results drew by a tone density sensor (a toner adhesive amount sensor) from test patterns for tone correction, which are formed on an image carrier such as a photoreceptor or a transfer belt. These methods will be explained below. The data for tone correction, which is calculated by the data calculator 39 for tone correction, is recorded in the data holder 38 for tone correction. Then, based on the latest data for tone correction, the tone corrector 35 performs a tone correction.

The error diffusion processor 36 performs an error diffusion on the image data (eight-bit) having 256 tones to obtain value-decreased data SG 1 (one-bit) having two tones.

The D/A converter 37 performs a D/A conversion on the digital print data to output analog print data.

The ground pattern merger 40 serves to give ground pattern image data to the image data outputted from the D/A converter 37 after image processings, to create data of image with a ground pattern, when a user inputs an instruction via the operation panel 5. The ground pattern image to be given is originally generated by the ground pattern image generator 42 based on respective data for the background part B and the latent image part A, which are recorded in the ground pattern data holder 41, then the ground pattern output level corrector 43 corrects the generated data to obtain an optimal output level of a ground pattern to be outputted. The ground pattern output level corrector 43 performs the correction based on data calculated by the data calculator 44.

In this way, the ground pattern merger 40 merges the corrected ground pattern image data and the target image data to output data of image with a ground pattern.

In this embodiment, an error diffusion method is taken just as an example, and another image processing method is also applicable. In addition, number of bits per pixel and number of tones are not limited.

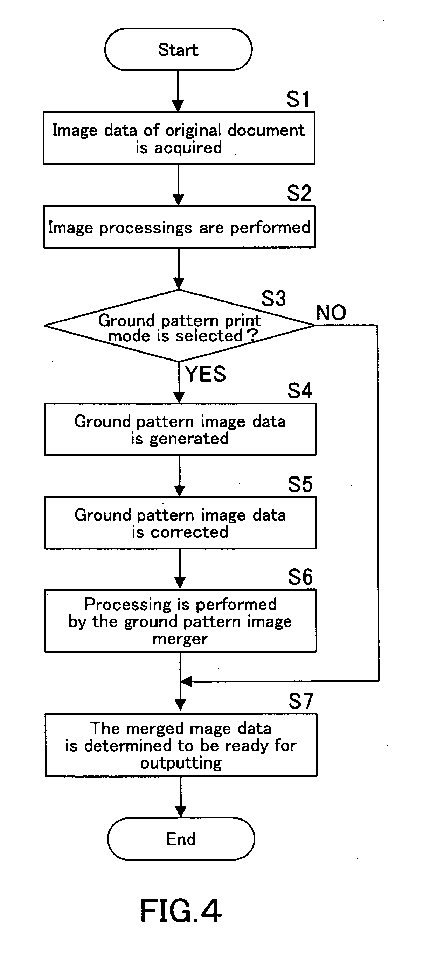

Hereinafter, how the image signal processor 20 creates data of image with a ground pattern will be explained with reference to the flowchart in Fig. 4.

As shown in Fig. 4, image data of a document read by the scanner 4 is acquired in Step S1, and then in Step S2, the shading corrector 23 and the image corrector 30 perform image processings, respectively.

Subsequently, it is judged in Step S3 whether or not a ground pattern print mode is selected by a user via the operation panel 5. If a ground pattern print mode is not selected (NO in Step S3), the routine proceeds to Step S7 where the image data is used directly for outputting.

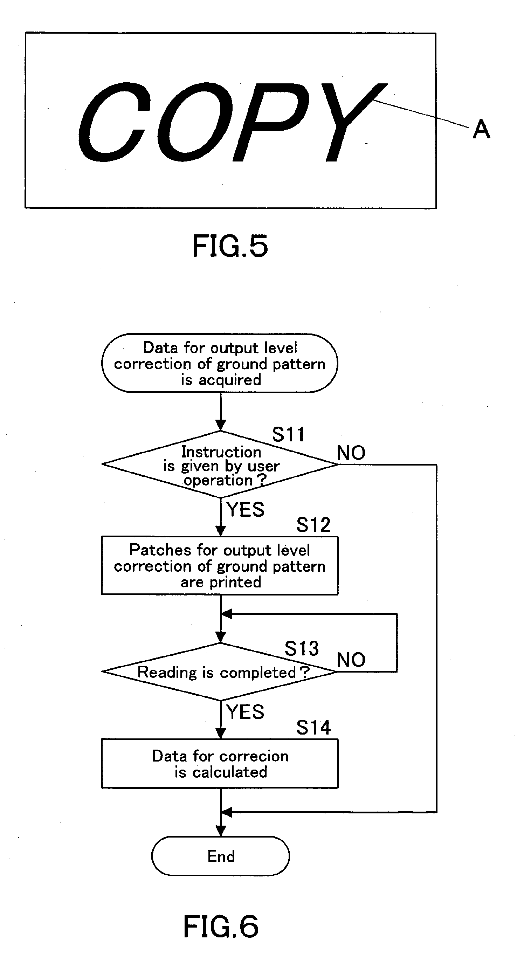

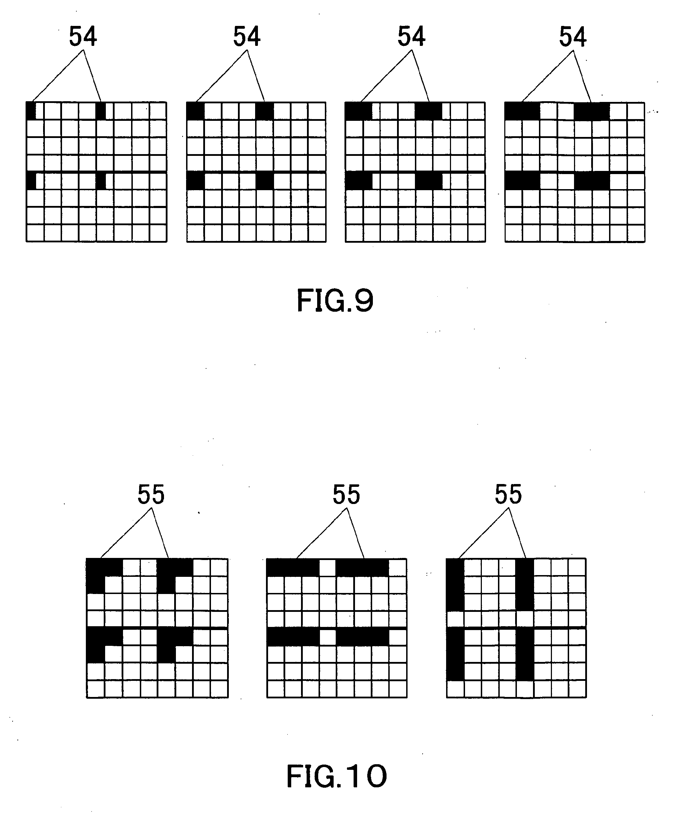

If a ground pattern print mode is selected (YES in Step S3), ground pattern image data is generated in Step S4. The ground pattern image data is generated by merging the background part B and the latent image part A, according to latent image part definition image data (shown in Fig. 5). The latent image part definition image data is used to define the latent image part. The background part B and the latent image part A consist of some blocks having one bit per pixel, and the blocks are periodically and repeatedly aligned, as shown in Fig. 9 and Fig. 10.

In the background part B, some bits (1 for example) indicate black pixels and the other bits (0 for example) indicate white pixels. Similarly, black pixels and white pixels, but more black pixels are given in the latent image part A, than those in the background part B, in order to make dots look larger, as shown in Fig. 23.

In this embodiment, ground pattern image data consists of pixels each having one bit for example, but not limited to one bit.

Proceeding to Step S5, wherein the generated ground pattern image data is corrected to obtain a predetermined output level, then in Step S6, the corrected ground pattern image data is merged with the image data of the document. In Step S7, the merged image data is determined to be ready for outputting. The data of image with a ground pattern, which is to be outputted, is transmitted to the printer 7 and printed on paper or others.

Hereinafter, how to acquire data for output level correction of ground pattern will be explained.

Fig. 6 is a flowchart showing processes to acquire the data for output level correction. The processes are executed by the CPU 1 according to a program recorded in a recording medium such as the ROM 2.

The processes are started by user operation to press a button for automatic output level correction of ground pattern (not shown in Figure) prepared in the operation panel 5.

In Step S11, it is judged whether or not an instruction is given by user operation to press the button. If an instruction is not given by user operation (NO in Step S11), the routine directly terminates. If an instruction is given by user operation (YES in Step S11), the printer 7 prints a plurality of test patterns for output level correction of ground pattern in different output levels on paper or others, in Step S12.

Then, a user makes the printed paper carrying the test patterns for output level correction of ground pattern read by the scanner 4. In Step S13, it is judged whether or not the reading is completed. If it is not completed (NO in Step S13), the routine waits until it is completed. If it is completed (YES in Step S13), data for correction is calculated in Step S14.

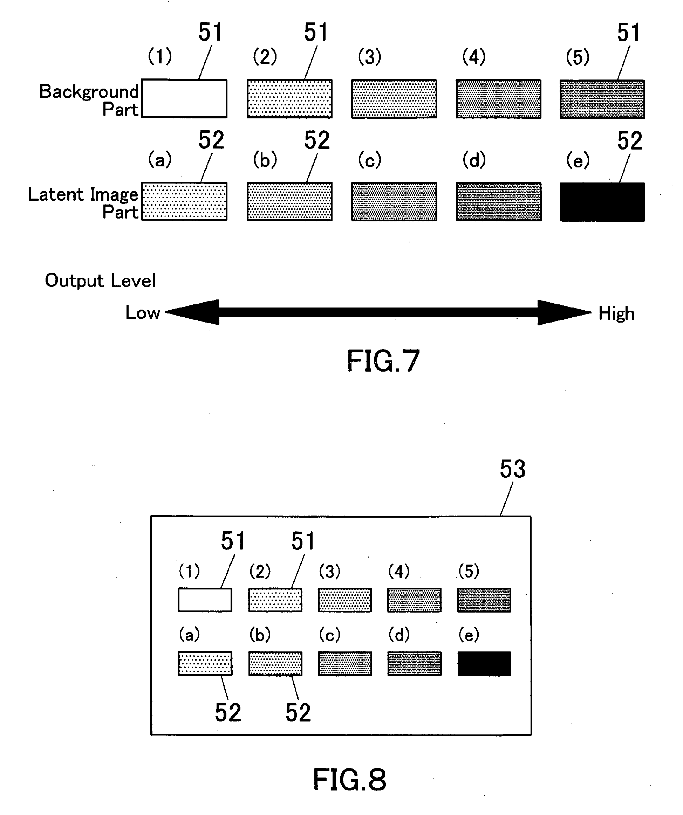

Fig. 7 shows test patterns 51 and 52 preliminarily recorded in the storage 6 (the ground pattern data holder 41), and Fig. 8 shows outputted paper 53 carrying the test patterns (also referred to as "image sample for output level correction of ground pattern'').

The test patterns 51 and 52 for output level correction of ground pattern are prepared for the latent image part A and the background part B, respectively.

For the background part B, there are five test patterns 51 (1) to (5), each having different size of dots, aligned in the order of output levels as shown in Fig. 7.

Similarly, for the latent image part A, there are five test patterns 52 (a) to (e), each having different size of dots, aligned in the order of output levels. The size of dots in the test patterns 52 of the latent image part A is larger than that in the test patterns 51 of background part B, respectively.

In this embodiment, to obtain different sizes of dots for the patterns 51 of the background part B and the patterns 52 of the latent image part A, a method is taken just as an example, and the method is changing the size of a pixel 54 depending on laser light volume that forms a dot as shown in Fig. 9. Changing the layout of a pixel 55 as shown in Fig. 10, is also applicable.

As shown in Fig. 8, the image sample 53 for output level correction of ground pattern is printed paper carrying a plurality of the patterns 51 of the background part B and the patterns 52 of the latent image part A, and the patterns are aligned in the sub-scanning direction. The image sample 53 is placed on the document table 9 (shown in Fig. 2) of the scanner 4, and then read by the scanner 4.

When a document with a ground pattern is read, the scanner 4 does not ordinarily pick up small dots in the background part B of the ground pattern. Or if it does, data of the picked up dots is erased so as not to be outputted on paper. On the other hand, when it is read for the purpose of output level correction of ground pattern, it is necessary to detect an output level of the patterns 51 for output level correction of the background part B with a high degree of accuracy.

To read the patterns 51 for output level correction of the background part B carefully, a reading speed of the scanner 4 is set to a lower level than ordinary. And, noise removal and corrections ordinarily performed on readout image data, are enabled.

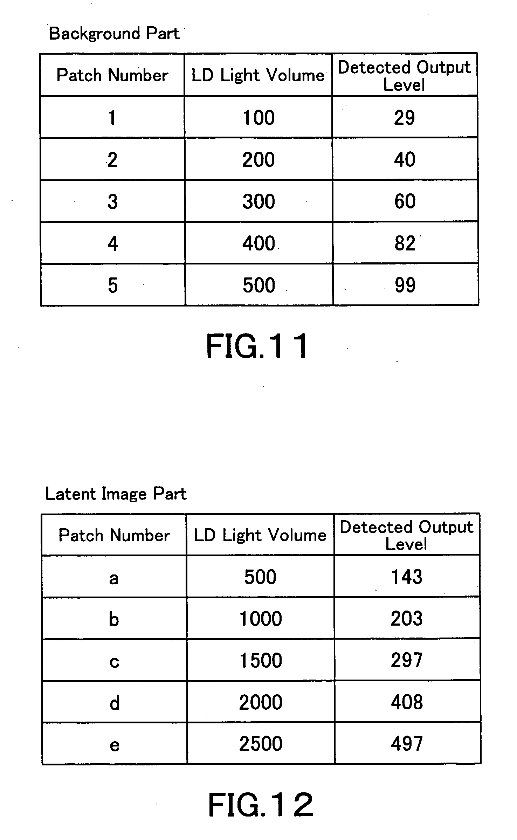

As shown in Fig. 11 and Fig. 12, respective output levels of the patterns 51 of the background part B and the patterns 52 (hereinafter, also referred to simply as "detection patches") of the latent image part A, are detected individually. Fig. 11 shows detecting results from the background part B, and Fig. 12 shows those from the latent image part A. "LD light volume" in Fig. 11 and Fig. 12 means laser (diode) light volume to form dots in the respective detection patches.

Based on the output levels detected from the respective detection patches in this way above, laser light volume needed for the latent image part A and the background part B to be outputted in optimal output levels, is calculated in the data calculation process in Step S14 of the flowchart shown in Fig. 6.

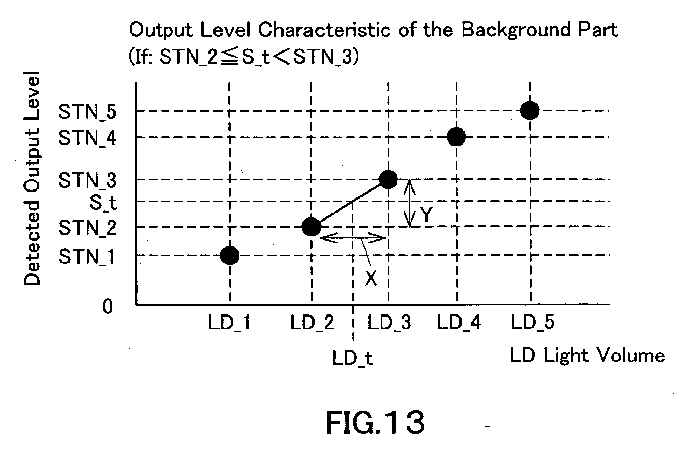

Hereinafter, how to calculate laser (LD) light volume for the background part B will be explained with reference to the chart of output characteristic of the background part B, which is shown in Fig. 13.

As shown in the table in Fig. 11, it is assumed that the laser light volume "100" is needed to obtain a first detection patch 51. Similarly, it is assumed that the laser light volumes "200", "300", "400" and "500" are needed to obtain second, third, fourth and fifth detection patches 51, respectively. On the other hand, it is assumed that the detected output level value STN_1 of the first detection patch 51 is "29". Similarly, it is assumed that the detected output level values STN_2 , STN_3, STN_4 and STN_5 of the second, third, fourth and fifth detection patches 51, are "40", "60", "82" and "99", respectively.

According to a plurality of the detecting results, a calculation is performed by inserting a condition to obtain a target output level value into a calculating formula. In this embodiment, if S_t =50 is set as the target output level value, there should exist laser light volume that brings S_t = 50, behind between those of the second and third detection patches. Therefore, the laser light volume LD_2 and the detected output level value STN_2 of the second detection patch, and the laser light volume LD_3 and the detected output level value STN_3 of the third detection patch, are used for calculation of the laser light volume LD_t that is to be set, in the following calculating formula: LD_t = (S_t - STN_2) x (LD_3 - LD_2) / (STN_3 - STN_2) + LD_2 = (50 - 40) x (300 - 200) / (60 - 40) + 200 = 250.

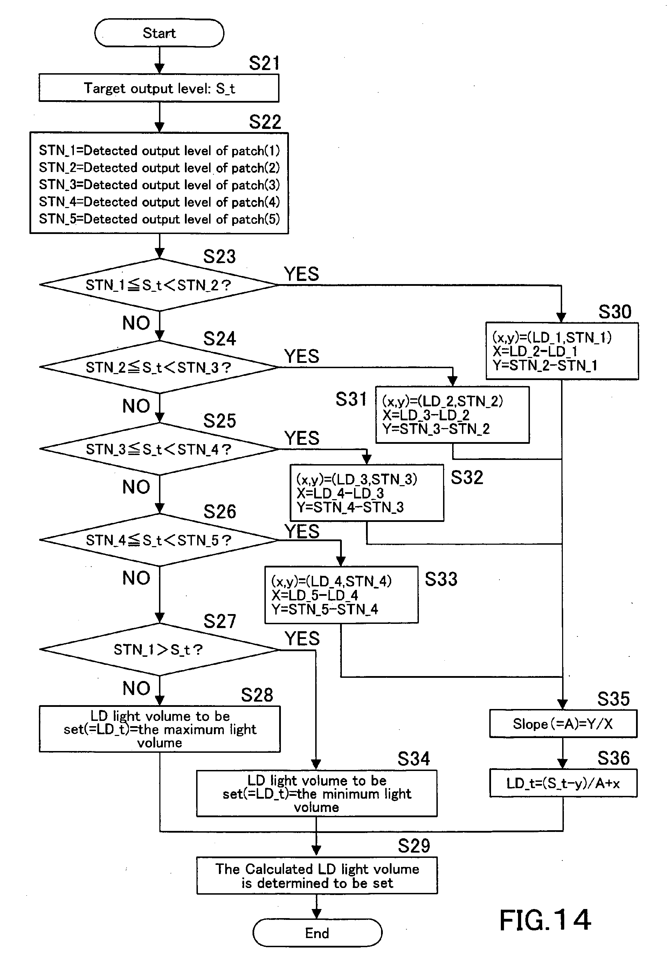

Fig. 14 is a flowchart showing processes to calculate data for correction, which is shown in Step S14 of Fig. 6, and the processes are performed according to the calculation example explained above with reference to Fig. 13.

As shown in Fig. 14, the target output level value S_t is set in Step S21. In Step S22, it is set that STN_1 = the detected output level value of the first detection patch, STN_2 = the detected output level value of the second detection patch, STN_3 = the detected output level value of the third detection patch, STN_4 = the detected output level value of the fourth detection patch, and STN_5 = the detected output level value of the fifth detection patch.

In Step S23, it is judged whether or not STN_1 ≦ S_t < STN_2, and if it is STN_1 ≦ S_t < STN_2 (YES in Step S23), the routine proceeds to Step S30.

If it is not STN_1 ≦ S_t t < STN_2 (NO in Step S23), it is judged in Step S24 whether or not STN_2 ≦ S_t < STN_3. If it is STN_2 ≦ S_t t < STN_3, (YES in Step S24), the routine proceeds to Step S31.

If it is not STN_2 ≦ S_t < STN_3 (NO in Step S24), it is judged in Step S25 whether or not STN_3 ≦ S_t < STN_4. If it is STN_3 ≦ S_t < STN_4 (YES in Step S25), the routine proceeds to Step S32.

If it is not STN_3 ≦ S_t < STN_4 (NO in Step S25), it is judged in Step S26 whether or not STN_4 ≦ S_t < STN_5. If it is STN_4 ≦ S_t < STN_5 (YES in Step S2), the routine proceeds to Step S33.

If it is not STN_4 ≦ S_t < STN_5 (NO in Step S26), it is judged in Step S27 whether or not STN_1 < S_t. If it is not STN_1 < S_t (NO in Step S27), it is determined in Step S28 that the LD light volume to be set (= LD_t) = the maximum light volume, then the routine proceeds to Step S29.

If it is STN_1 < S_t (YES in Step S27), it is determined in Step S34 that the LD light volume to be set (= LD_t) = the minimum light volume, then the routine proceeds to Step S29.

In Step S29, the calculated LD light volume is determined, and then the routine terminates.

In Step S30, (x, y) = (LD_1, STN_1), X = LD_2 - LD_1, and Y = STN_2 - STN_1 are calculated, and then the routine proceeds to Step S35.

In Step S31, i(x, y) = (LD_2, STN_2), X = LD_3- LD_2, and Y = STN_3 - STN_2 are calculated, and then the routine proceeds to Step S35.

In Step S32, (x, y) = (LD_3, STN_3), X = LD_4- LD_3, and Y = STN_4 - STN_3 are calculated, and then the routine proceeds to Step S35.

In Step S33, (x, y) = (LD_4, STN_4), X = LD_5- LD_4, and Y = STN_5 - STN_4 are calculated, and then the routine proceeds to Step S35.

In Step S35, a slope (= A) = Y / X is calculated, and in Step S36, LD_t = (S_t - y) / A + x is calculated. And then in Step S29, the calculated LD light volume is determined as the laser light volume that brings the target output level value.

Similarly, optimal laser light volume for the latent image part A is also calculated according to the flowchart.

Then, the ground pattern output level corrector 43 in Fig. 3 corrects the data of the latent image part A and the background part B to obtain the determined laser light volume, in other words, to obtain optimal size of dots.

Although this embodiment is explained with the five detection patches 51 and the five detection patches 52, number of the detection patches 51 and 52 is not limited to five, and can be arbitrarily changed.

Meanwhile, in this embodiment, the size of dots is adjusted by changing the size of pixels depending on laser light volume as shown in Fig. 9. However, the size of dots also can be adjusted by changing the layout of pixels as mentioned with reference to Fig. 10. In this case, how output levels are changed by layout of pixels should be checked in advance to create the detection patches 51 and 52 aligned in the order of constantly increasing output levels.

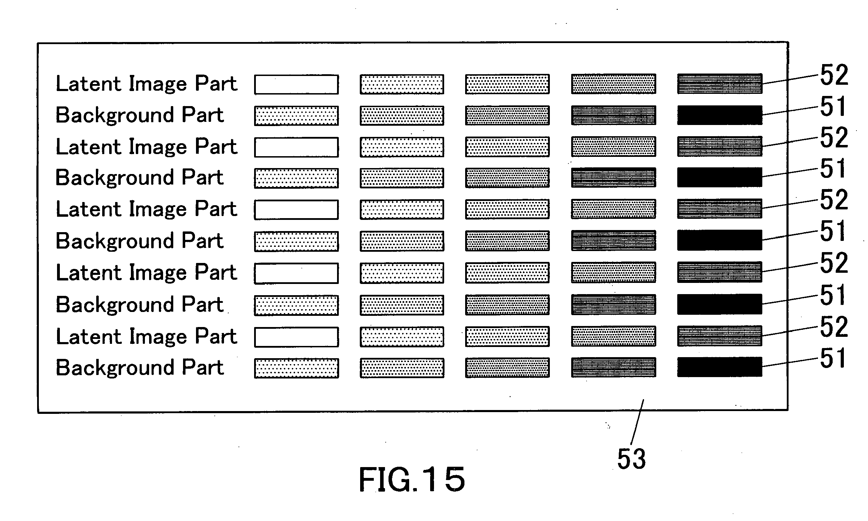

In addition, as shown in Fig. 15, another image sample 53 carrying a plurality of sets of detection patches of the latent image part A and the background part B, repeatedly aligned in the longitudinal direction (the main-scanning direction) along a developing sleeve, also can be utilized for output level correction of ground pattern. The image sample 53 is read by the scanner 4, and spotty data of an output level detected in the main-scanning direction is corrected. Therefore, image with a ground pattern is printed on a sheet of paper entirely in an optimal condition.

In addition, output levels also can be changed depending on location on the print side of paper.

In sum, in this embodiment, a plurality of the detection patches 51 and 52 outputted in different output levels are read by the scanner 4, then data for output level correction of ground pattern is calculated based on the reading results, and then output levels of the latent image part A and the background part B are automatically corrected based on the calculated data for correction. Therefore, the image forming apparatus can optimize an output level of a ground pattern without user operation to select the best ground pattern image, even if the output level of the ground pattern happens to be changed by a disturbance. Further, accurate data for correction is calculated based on data readout by the scanner 4 from detection patches, not based on data acquired by a sensor that senses the amount of used toner when an image stabilization control is performed. Based on the accurate data acquired in this way, the output level of the ground pattern can be corrected with a high degree of accuracy.

If only one time of reading does not allow acquiring data that is accurate enough for correction, it is only necessary to repeat the processes: creating another image sample 53, making the scanner 4 read the detection patches, and calculating data for correction.

Meanwhile, as described above in this embodiment, density (tone) of image data to be given ground pattern data can be also corrected.

Density (tone) of image to be outputted from the printer 7 of an image forming apparatus such as a copy machine, tends to be changed by a disturbance such as an environmental factor or aging, even under the same development conditions.

To remove the inconvenience, a tone correction is performed to correct toner density of image to be outputted. There are two methods to calculate data for tone correction as described above: one method is calculating data for tone correction based on reading results drew by the scanner 4 from test patterns for tone correction, which is outputted on paper or others, and the other method is calculating data for tone correction based on results detected from test patterns for tone correction, which are formed on an image carrier such as a transfer belt.

In the method of calculating based on detecting results from test patterns (also referred to as "toner patches") for tone correction, which are formed on an image carrier, a sensor to sense the amount of used toner should be prepared. Then, toner patches are formed on an image carrier when an image stabilization control is performed. The amount of used toner is detected by the sensor, and the actual amount of used toner is estimated. Based on the detecting results drew by the sensor, data for tone correction is calculated to print image in an optimal density after the image stabilization control is completed. A tone correction based on the acquired data for tone correction, also can be performed by adjusting image development conditions or others, not by a γ correction or others.

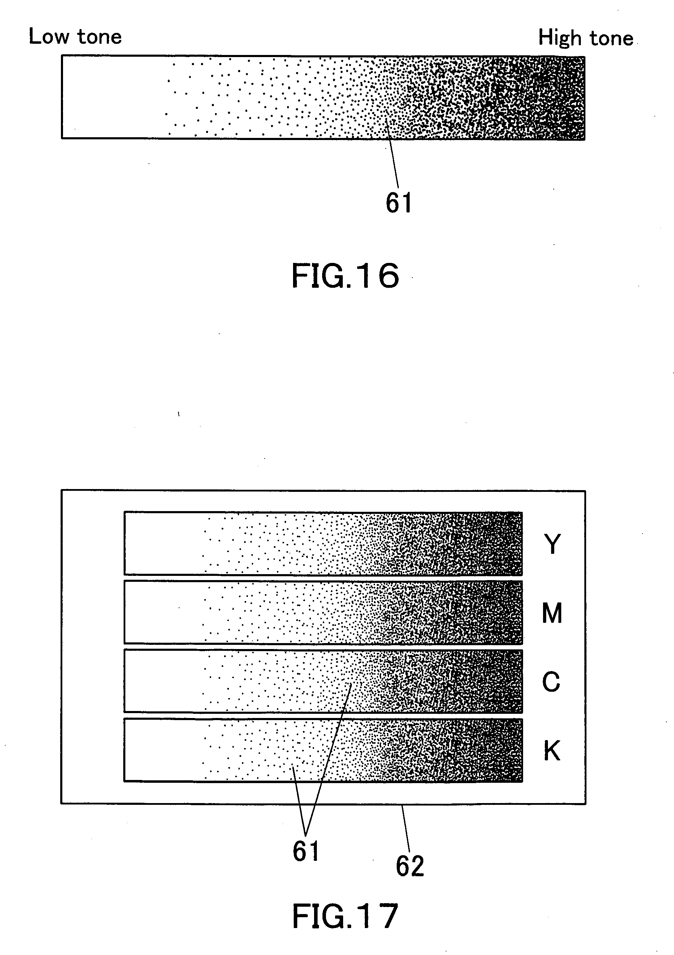

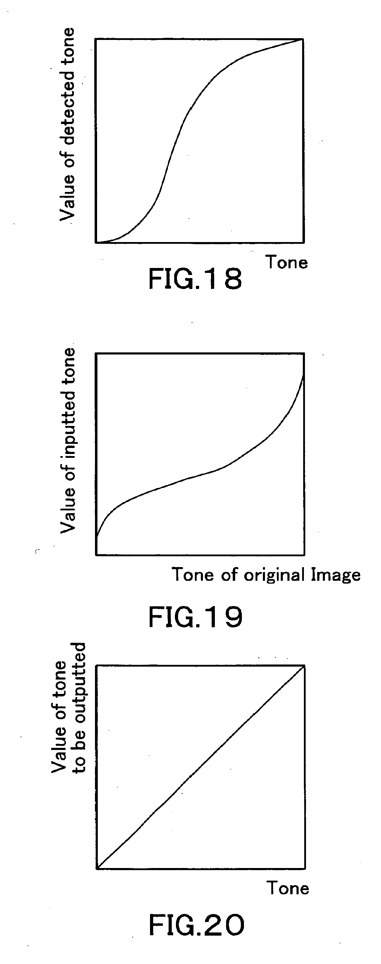

In the method of calculating based on reading results by the scanner 4 from test patterns for tone correction, a tone correction is performed with a higher degree of accuracy than the method of utilizing a sensor that senses the amount of used toner, and high-quality image can be obtained. That is, a test pattern 61 for tone correction, which has a density slope from lower tone to higher tone, is printed on paper in the respective colors of yellow (Y), magenta (M), cyan (C) and black (K) to create an image sample 62 as shown in Fig. 17, then the image sample 62 is ready by the scanner 4, and then a tone correction is performed based on the detected data for tone correction. For further details, the printed image sample 62 shown in Fig. 17 is read by the scanner 4, then the output level is detected by the sensor (CCD) 18 of the scanner 4, and then tone data shown in Fig. 18 is recorded.

Then, based on the detected tone data, a tone of original image data shown in Fig. 19 is corrected so as to reproduce a desirable tone characteristic shown in Fig. 20.

Hereinafter, timings to acquire data for output level correction of ground pattern and data for tone correction will be explained.

Generally, an image forming apparatus such as a copy machine comprises a counter that counts the number of printed sheets. Thus, there exist many image forming apparatuses that determine the timing to perform an image stabilization control based on the number of printed sheets, which is counted by the counter.

Users are notified of the timings to acquire data for tone correction and data for output level correction of ground pattern, by a message requesting for giving an instruction, which is displayed based on the number of printed sheets. Although acquisitions of the former data and the latter data can be performed in different timings, those are preferably performed simultaneously, because a simultaneous data calculation is more efficient than data calculations in different timings and never reduces productivity of the apparatus. It is also applicable that when test patterns for tone correction are printed on a sheet of paper, test patterns for output level correction of ground pattern are also printed on the same sheet of paper, and then those are read by the scanner 4, simultaneously.

As explained above in this embodiment, a plurality of test patterns for output level correction of additional information are outputted in different output levels by an output part, then data for output level correction of additional information such as a ground pattern is calculated based on reading results drew by an image reader from the test patterns for output level correction of additional information. And then, an output level of additional information is automatically corrected based on the calculated data for correction. In this way, an image forming apparatus can correct an output level of additional information without user operation to select the best image of the additional information, even if the output level of the additional information happens to be changed by a disturbance. In addition, accurate data for correction is calculated based on the reading results drew by the image reader from the test patterns for output level correction of additional information, not based on detecting results by a sensor that senses the amount of used toner when an image stabilization control is performed. Based on the accurate data acquired in this way, the output level of the ground pattern can be corrected with a high degree of accuracy.

A tone correction is further performed on image to be given the additional information, by an image forming apparatus comprises: a calculator for tone correction, which calculates data for tone correction of the image to be given the additional information, based on the reading results drew by the reader from the test patterns outputted by the output part; and a tone corrector that corrects a tone of the image to be given the additional information based on the calculated data for correction.

A tone correction is further performed on image to be given the additional information, by an image forming apparatus comprises: a detector that detects tones of test patterns for tone correction, which are formed on an image carrier owned by the output part; a data calculator for tone correction, which calculates data for tone correction of the image to be given the additional information, based on detecting results drew by the detector from the test patterns for tone correction; and a tone corrector that corrects a tone of the image to be given the additional information, based on the calculated data for tone correction.

In addition, even if the output level of the ground pattern happens to be changed, the output level is corrected by an image forming apparatus, wherein the additional information corresponds to a ground pattern consisting of dotted patterns and a calculator calculates data for output level correction of the ground pattern.

In addition, the output level of the ground pattern can be corrected by changing the size of pixels, if the data for output level correction of ground pattern relates to the size of pixels.

In addition, the output level of the ground pattern can be corrected by changing the layout of pixels, if the data for output level correction of ground pattern relates to the design of pixels.

In addition, spotty data of the output level of the additional information, which is detected in the main-scanning direction, can be corrected by an image forming apparatus, wherein the test patterns for output level correction of additional information are aligned repeatedly in the main-scanning direction, and an output level corrector corrects the spotty data of the output level of the additional information, which is detected in the main-scanning direction.

In addition, if a calculator for output level correction performs a calculation simultaneously with a calculation by the calculator for tone correction, the calculation is performed more efficiently without reducing productivity of the apparatus than a case where those calculators perform the calculation in different timings.

In addition, if the reader reads the test patterns for output level correction of additional information at a slower speed than it reads image to be given the additional information, the reader can reads the test patterns correctly for calculating data for output level correction with high degree of accuracy, even if the test patterns consists of small dots just like the background part of the ground pattern does.

In addition, if an output level of additional information happens to be changed by a disturbance, it is possible to correct the output level of the additional information with a high degree of accuracy automatically without user operation to select the best image of the additional information, by an image processing method comprising: reading image by a reader; outputting the image by an output part; giving additional information to the image before outputting the image by the output part; making the output part output a plurality of test patterns for output level correction of additional information in different output levels; calculating data for output level correction of additional information based on reading results drew by a reader from the outputted test patterns for output level correction of additional information; and correcting the output level of the additional information based on the calculated data for correction.

In addition, it is possible to correct a tone of image to be given the additional information, by an image processing method further comprising: calculating data for tone correction of the image to be given the additional information, based on reading results drew by the reader from test patterns for tone correction, which are outputted by the output part; and correcting the tone of the image to be given the additional information, based on the calculated data for correction.

In addition, it is possible to correct a tone of image to be given the additional information by an image processing method further comprising: detecting a tone of test patterns for tone correction, which are formed on an image carrier owned by the output part; calculating data for tone correction of the image to be given the additional information, based on the detecting results drew by a detector; and correcting the tone of the image to be given the additional information, based on the calculated data for tone correction.

In addition, it is possible not only to calculate data for output level correction of additional information such as a ground pattern based on reading results drew by a reader from test patterns for output level correction of additional information in different output levels, but also to correct an output level of image based on the calculated data for correction, according to an image processing program to make a computer execute: reading image by a reader; outputting the image by an output part; giving additional information to the image before outputting the image by the output part; making the output part output a plurality of test patterns for output level correction of additional information in different output levels; calculating data for output level correction of additional information based on reading results drew by the reader from the outputted test patterns for output level correction of additional information; and correcting an output level of the additional information based on the calculated data for correction.

In addition, it is possible to correct the output level of the image to be given the additional information according to an image processing program to make a computer further execute: calculating data for tone correction of the image to be given the additional information, based on reading results drew by the reader from test patterns for tone correction, which are outputted by the output part; and correcting the image to be given the additional information, based on the calculated data for correction.

In addition, it is possible to correct a tone of the image to be given the additional information according to an image processing program to make a computer further execute: detecting a tone of the test patterns for tone correction, which are formed on an image carrier owned by the output part; calculating data for tone correction of the image to be given the additional information, based on the detecting results drew by a detector from the test patterns for tone correction; and correcting the tone of the image to be given the additional information, based on the calculated data for tone correction.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g. of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to". In this disclosure and during the prosecution of this application, means-plus-function or step-plus-function limitations will only be employed where for a specific claim limitation all of the following conditions are present In that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example", and "NB" which means "note well".

## Claims

1. An image forming apparatus, comprising:
a reader to read image(4);
an output part to output the image (7);
an information giving part(40) to give additional information to the image before the image is outputted by said output part;
an output controller (1) to make said output part output a plurality of test patterns for output level correction of additional information in different output levels;
a data calculator(44) for output level correction, to calculate data for output level correction of said additional information based on reading results drew by said reader from said outputted test patterns for output level correction of additional information; and
an output level corrector(43) to correct an output level of said additional information based on said calculated data for correction.

2. An image forming apparatus as recited in Claim 1, comprising:
a data calculator(39) for tone correction, to calculate data for tone correction of image to be given said additional information based on the reading results drew by said reader from test patterns for tone correction, which are outputted by said output part; and
a tone corrector(35) to correct a tone of the image to be given said additional information based on said calculated data for correction.

3. An image forming apparatus as recited in Claim 1, comprising:
a detector to detect a tone of test patterns for tone correction, which are formed on an image carrier owned by said output part;
a data calculator(39) for tone correction, to calculate data for tone correction of image to be given said additional information based on the detecting results drew by said detector from the test patterns for tone correction; and
a tone corrector(35) to correct a tone of the image to be given said additional information based on said calculated data for tone correction.

4. An image forming apparatus as recited in Claim 1, wherein said additional information corresponds to a ground pattern that consists of dotted patterns, and said data calculator calculates data for output level correction of said ground pattern.

5. An image forming apparatus as recited in Claim 4, wherein data for output level correction of the ground pattern relates to the size of pixels.

6. An image forming apparatus as recited in Claim 4, wherein data for output level correction of the ground pattern relates to the layout of pixels.

7. An image forming apparatus as recited in Claim 1, wherein the test patterns for output level correction of additional information are aligned repeatedly in the main-scanning direction, and said output level corrector corrects spotty data of the output level of the additional information, which is detected in the main-scanning direction.

8. An image forming apparatus as recited in Claim 2, wherein said data calculator for output level correction performs a calculation simultaneously with a calculation by said data calculator for tone correction.

9. An image forming apparatus as recited in Claim 2, wherein said reader reads the test patterns for output level correction of said additional information at a slower speed than it reads the image to be given the additional information.

10. An image processing method, comprising:
reading image by a reader;
outputting the image by an output part;
giving additional information to the image before outputting the image by said output part;
making said output part output a plurality of test patterns for output level correction of additional information in different output levels;
calculating data for output level correction of said additional information based on reading results drew by said reader from said outputted test patterns for output level correction of additional information; and
correcting an output level of said additional information based on said calculated data for correction.

11. An image processing method as recited in Claim 10, further comprising:
calculating data for tone correction of image to be given said additional information based on reading results drew by said reader from test patterns for tone correction, which are outputted by said output part; and
correcting a tone of the image to be given said additional information based on said calculated data for correction.

12. An image processing method as recited in Claim 10, further comprising:
detecting a tone of test patterns for tone correction, which are formed on an image carrier owned by said output part;
calculating data for tone correction of image of said additional information based on detecting results drew by said detector from the test patterns for tone correction; and
correcting a tone of the image to be given said additional information based on said calculated data for tone correction.

13. An image processing program recorded in a computer readable recording medium to make a computer execute:
reading image by a reader;
outputting the image by an output part;
giving additional information to the image before outputting the image by said output part;
making said output part output a plurality of test patterns for output level of additional information in different output levels;
calculating data for output level correction of said additional information based on reading results drew by said reader from said outputted test patterns for output level correction of additional information; and
correcting an output level of said additional information based on said calculated data for correction.

14. An image processing program as recited in Claim 13, further makes a computer execute:
calculating data for tone correction of image to be given said additional information based on reading results drew by said reader from test patterns for tone correction, which are outputted by said output part; and
correcting an tone of the image to be given said additional information based on the calculated data for correction.

15. An image processing program as recited in Claim 13, further makes a computer execute:
detecting a tone of test patterns formed on an image carrier owned by said output part;
calculating data for tone correction of image to be given said additional information based on detecting results drew by said detector from the test patterns for tone correction; and
correcting a tone of the image to be given said additional information based on said calculated data for tone correction.
